# EUROPEAN PATENT APPLICATION

(11) **EP 0 785 526 A2**
(43) Date of publication of application: **23.07.1997**
(21) Application number: 97100747.1
(22) Date of filing: 18.01.1997
(51) Int. Cl.: G06K 19/06, G06K 19/10

(54) **Variably encrypted coded card system**

(30) Priority: 18.01.1996 JP 23412/96; 18.01.1996 JP 23413/96
(71) Applicant: Nagashio, Kichinosuke, Tokyo 150 (JP)
(72) Inventor: Nagashio, Kichinosuke, Tokyo 150 (JP)
(74) Representative: Merten, Fritz

(57) **Abstract**

A coded card on which is encoded, by way of a card writing means, prescribed digits and characters, expressed in a two dimensional nested figure code. The digits and characters representing information are encoded on the card according to an encoding protocol using a variety of encoding variables. The encoding protocol used uniquely corresponds to a key code and is selected from a plurality of protocols and identified with the coded card by imprinting the corresponding key code on the card in a specified location. The key code is itself a two dimensional nested figure code of the same variety as the two dimensional nested figure codes that encode the main encoded information. The key code is read by a standard key reading protocol that does not change from card to card in the way that the main decoding protocol changes.

## Description

### BACKGROUND

This invention relates to measures for encrypting the information printed on coded cards. Specifically, this invention relates to protocols, materials, figures, and reading variables formulated to encode information on a coded card.

Coded cards, common throughout the world, are most commonly used as credit cards, cash cards, identification cards, and various types of prepaid cards such as phone cards. Data are encoded on these cards by either printing or magnetic recording means. Credit cards such as VISA®, cash cards issued by financial institutions, and various types of prepaid cards such as telephone cards are almost exclusively magnetic recording cards.

In a magnetic recording card, for example a credit card, personal information such as the code number of the card issuer and the user's personal number, name, and title, as well as information such as the effective term of the card and its card type, is converted to seven-bit-per-character signals, which include a parity check. This information of up to 79 characters is magnetically recorded on a 7.3-mm-wide magnetic stripe on the back or front of the card.

The size of the magnetic stripe naturally imposes a limitation on security measures, including encoding, because all the card information, including the parity signal for correcting bit errors, must be recorded on a magnetic stripe that can record no more than about 79 characters. Consequently, it is not a technically difficult job to decipher or forge the data on a magnetic card. As a result, the number of cases of magnetic card misuse appears to be steadily growing. However, assessment of the actual extent of card misuse is difficult because: (1) card misuse reflects negatively on the management of the card company itself, and (2) because methods of misuse and accurate statistics are not generally made public. The only readily available figure on this problem is the approximately $200 million (about 20 billion yen) loss attributed to credit card misuse in the United States during 1985. Losses in more recent years are uncertain.

Bank and other cash cards are not in as wide use as credit cards, which are distributed internationally. Consequently, it might be expected that cash card losses would be less, but the total amount of cash card losses may actually be greater, because the amount lost per cash card misuse is much greater. In the case of bank cash cards, a dozen years ago there were practices in place that today would be unbelievable from the standpoint of financial institution security, such as magnetically recording code numbers in non-encrypted form on the card's magnetic stripe. Consequently, card crimes occurred in which other people's cards were easily forged and millions were improperly withdrawn. In response, cash cards have used a "zero verification system" in which no personal identification number is recorded on the card. Rather, security is integral with the bank's host computer which compares the personal identification number input by the customer with the one in its records. However, this method of protection by personal identification number is still not completely secure. People tend to choose easy-to-remember, consequently easy-to-guess, numbers such as their date of birth, the birthday of a family member, their telephone number, or their street address.

Telephone cards and other prepaid cards, being magnetic recording cards, are also easy to alter. An ironic example of such forgery is illustrated in the case where a public telephone that accepts telephone cards, installed in response to customer complaints about not receiving proper change when depositing 100-yen pieces in coin-operated phones, was stolen and transformed into a telephone card counterfeiting machine. Its circuitry was modified so that every time a telephone card was inserted into it, the number of use times recorded magnetically on the card, was incremented rather than decremented. This had the effect of "recharging" a run-down telephone card.

Subsequent measures against such misuse include: prohibiting high-value cards entitling one to use a phone, for example, more than 105 times; and ensuring that when a caller is finished using a card-accepting phone or when the power to the phone is disconnected, a security function disables the use-counting circuitry. None the less, as long as the telephone card uses a simple mechanism for magnetically recording the number of times it has been used, such hardware and software protections, which are said to cost several thousand dollars per phone, cannot guarantee that the information on the card won't be deciphered and stolen.

Seen this way, the development of magnetic card security has been a battle of wits between forgery organizations constantly developing methods to bypass security and card companies trying to put a stop to such theft. Counterfeiters have now learned to get by the optical "dove hologram" technology introduced on VISA® cards, along with encoding of the data that distinguishes genuine cards from forgeries. Such counterfeiters have brought forth an era of fourth-generation fake cards.

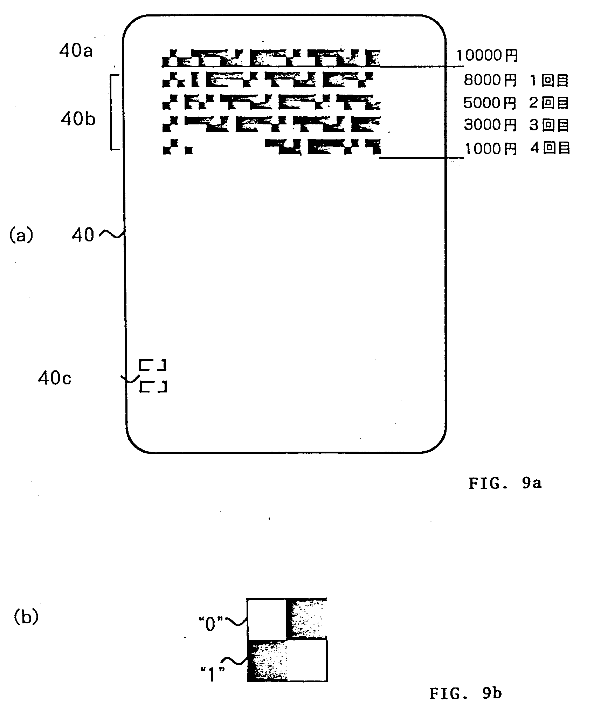

The development of magnetic cards has proceeded thus far despite fundamental misgivings about security, while counterfeiting organizations have become increasingly more sophisticated in electronics. In place of magnetic cards, coded cards have recently been developed that use a two-dimensional figure code made with printing technology rather than an easily forged magnetic recording system. An example of such a two-dimersional code card 40 is shown in Fig. 9(a).

The information printed in an initial code area 40a at the top level of two-dimensional code card 40 shown in Fig. 9a is written with a four-segment two-dimensional figure code, called a Calra code, shown in Fig. 9b. In Calra code, the four divisions into which a square is partitioned constitute the basic code unit, a black-filled division representing "1" and an unmarked white division representing "0", with various information expressed by combinations of 1 and 0. The Calra code system has the advantages of storing a greater quantity of information than, a bar-code, and of allowing direct computer processing. Because it is printed with a special figure code, two-dimensional code card 40 cannot be duplicated simply the way that magnetically encoded data on a magnetic card is duplicated with a magnetic head.

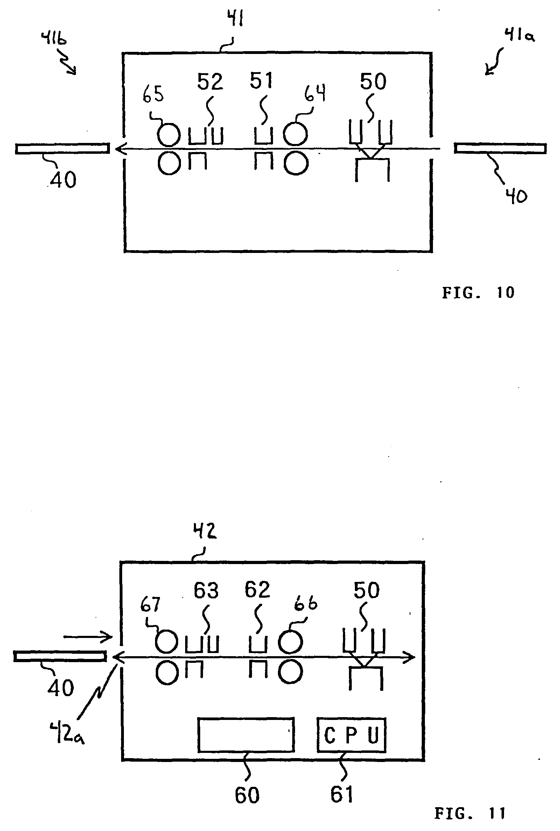

Referring to Fig. 10, when the fee is inserted into a conventional card issuing machine 41 from a customer side 41a, a card such as the one of Fig. 9a is issued encoded with a value corresponding to the amount inserted. To accomplish this, the issuing machine first reads an ID code on the printing portion of a blank prepaid card 40 to be issued by means of an optical reading sensor 50. The card then passes through a roller 64. As card 40 is fed from roller 64, a writing head 51 writes Calra code numerical information, etc. onto initial code area 40a (Fig. 9a) while scanning back and forth at the prescribed speed in an orientation perpendicular to the direction in which the card moves. For example, if a 10,000-yen note is inserted and the 10,000-yen button is pressed, numerical information for 10,000 yen is written onto initial code area 40a of prepaid card 40 as shown in Fig. 9a. Once the writing is complete, the written-in content of the black and white segments of Calra code is confirmed by an optical reading head 52. If there are no errors, card 40 is sent by a roller 65 to an issue side 41b to be delivered to the customer.

Fig. 11 is a simplified block diagram of a conventional card reader 42. For use, card 40, Fig. 9a, is inserted into card reader 42 through an access 42a and the monetary amount of the desired transaction is entered by means of a fee input unit 60. A central processing unit ( 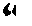 CPU 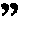 ) 61 decodes the remaining monetary amount on initial code area 40a or a balance code area 40b of inserted prepaid card 40 by means of a reading head 63. After confirming that the remaining amount is sufficient, it issues a command to release the corresponding good (game ticket, item of merchandise, telephone call, photocopy, etc.). Once the transaction is complete a writing head 62 writes the new encoded balance (for example, 8,000 yen) on the next line of balance code area 40b of prepaid card 40 and returns it through access 42a.

These Calra coded cards provide an accurate and simple system for encoding information that is directly readable by a digital reader. However, they have several drawbacks. The amount of information that can be encoded by a basic unit of Calra code is limited to a four bits. Additionally, the cards are susceptible to decoding by counterfeiters. Once decoded, all cards of the same type can all be read and reproduced by standard printing technology. Such vulnerability evokes a greater extent of damage than if each individual card were to have a unique code such that if it were to be decoded by a counterfeiter the code would only apply to that card.

In view of the above problems with coded cards it is desirable to provide a two-dimensional figure code card that utilizes a printed code that: can encode a large amount of digital information, is directly readable by a digital reader, and is resistant to generalized counterfeiting schemes such as those described above by encoding each card with a unique code.

### OBJECTS AND SUMMARY OF THE INVENTION

It is an object of the present invention to solve the problems, and overcome the drawbacks of the prior art.

It is another object of the present invention to devise a system of encoding a coded card in a way that is unique for each card and changes from card to card such that deciphering the code used to encrypt one card does not decipher the code of other cards.

It is yet another object of the present invention to incorporate the advantages of using a two dimentional nested figure code to encode information on the coded card.

A feature of the present invention provides a variably encrypted coded card, comprising; the coded card having a face and a back, encoded information printed on at least one of the face and the back, the encoded information printed with an ink like substance, the ink like substance being at least one selected from the group consisting a visible ink like substance and an invisible ink like substance, at least a part of the encoded information including at least one two dimensional nested figure code, the encoded information including an information code, and at least one key code, the two dimensional nested figure code composed of at least one element having an overall shape, the overall shape having a rotation point and a polylateral symmetry, each at least one element consisting of a plurality of segments arranged end to end to form the overall shape, each segment having at least one gap position, each gap position encoding a bit of binary data, and the key code encoding a data dictating an information-code-decoding-protocol for decoding the information code.

Optionally, the key code is a two dimensional nested figure code, the key code is decoded by a standard key decoding protocol, and the information code decoding protocol is one selected from the group consisting of directly readable from the key code, correlated with a stored protocol corresponding to a number given by the key code, and correlated with a stored protocol corresponding to an issue date given by the key code. The information code decoding protocol may include at least one selected from the group consisting of, rotating at least one of the at least one element of the two dimensional nested figure code about the rotation point, reflecting at least one of the at least one element of the two dimensional nested figure code about a reflection axis, advancing a reading of at least one of the elements in a clockwise direction, advancing a reading of at least one of the elements in a counterclockwise direction, advancing a reading to a next element of the nested figure in an outside to inside direction, advancing a reading to the next element of the nested figure in an inside to outside direction, reading all corresponding segments for all the elements of each nested figure code in an outside to inside direction prior to advancing, reading all corresponding segments for all the elements of each nested figure code in an inside to outside direction prior to advancing, dictating a read order of a plurality of the nested figure codes, dictating a position of non-readable nested figure codes, dictating a position of readable nested figure codes, dictating a position of non-readable gap positions, and dictating a position of readable gap positions.

It is yet another feature of the present invention to provide a variably encrypted coded card, comprising; an information code, at least one key code, the information code and the at least one key code being composed of at least one two-dimensional nested figure code, each at least one two-dimensional nested figure code having an overall shape with a rotation point and polylateral symmetry, and the key code encoding at least one reading variable for decoding the information code.

It is yet another feature of the present invention to provide a method of encoding a variably encrypted coded card, comprising the steps of, providing a selected key code to be printed on the coded card, the selected key code being one selected from a plurality of key codes, each key code of the plurality of key codes corresponding to a unique decoding protocol, printing the selected key code as a two-dimensional nested figure code on the coded card, and printing information on the coded card in a manner consistent with the unique decoding protocol corresponding to the selected key code. Optionally, the step of printing the selected key code and the step of printing information are accomplished using an invisible ink.

Using a variably encrypted coded card thus generated, comprises the steps of, illuminating the card with an invisible ink illuminator, reading the key code according to a standard protocol, and reading the information according to the unique decoding protocol corresponding to the key code.Optionally, use further comprises the step of further processing a readout from the step of reading the information to yield a final information. Such further processing may, for example, include at least one of removing non-readable code regions defined by stop and start signals, and converting readable code regions into standard alphanumeric characters using a degenerate decoding table.

In summary, the present invention is a coded card on which is encoded, by way of a card writing means, prescribed digits and characters, expressed in a two dimensional nested figure code. The digits and characters representing information are encoded on the card according to an encoding protocol using a variety of encoding variables. The encoding protocol used uniquely corresponds to a key code and is selected from a plurality of protocols and identified with the coded card by imprinting the corresponding key code on the card in a specified location. The key code is itself a two dimensional nested figure code of the same variety as the two dimensional nested figure codes that encode the main encoded information. The key code is read by a standard key reading protocol that does not change from card to card in the way that the main decoding protocol changes.

### BRIEF DESCRIPTION OF THE DRAWINGS

Fig. 1 depicts the components of a four-sided/two-dimensional figure code that is utilized in the present invention.
Fig. 2 depicts a coded card that utilizes the figure code of Fig. 1 to encode information.
Figs. 3a-d depict two dimensional figure codes that exemplify use with the security procedures of the present invention, wherein:

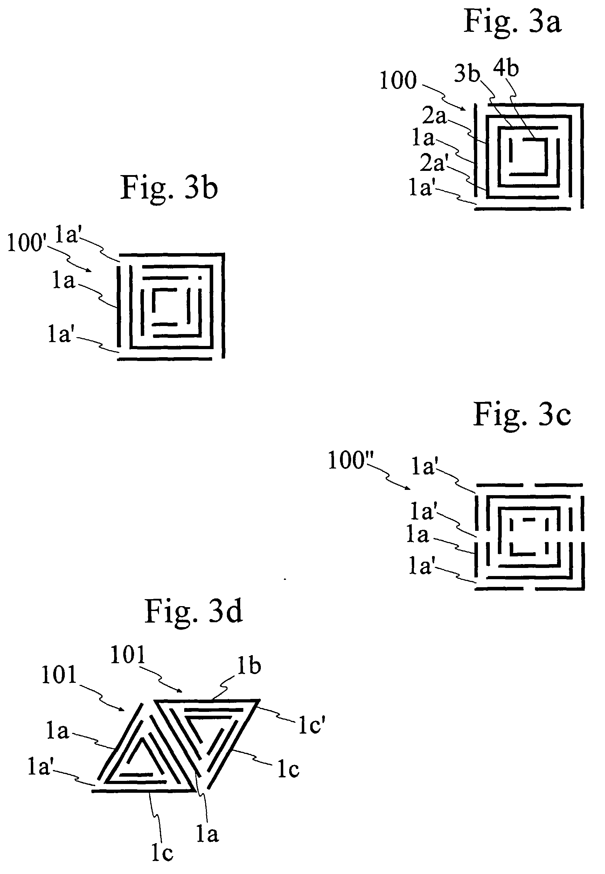

   Fig. 3a illustrates a basic four sided nested figure code utilizing a single gap position on each side of each element;
   Fig. 3b illustrates a basic four sided nested figure code utilizing a double gap position on each side of each element;
   Fig. 3c illustrates a basic four sided nested figure code utilizing a triple gap position on each side of each element; and
   Fig. 3d illustrates two basic three sided nested figure codes utilizing a single gap position on each side of each element.

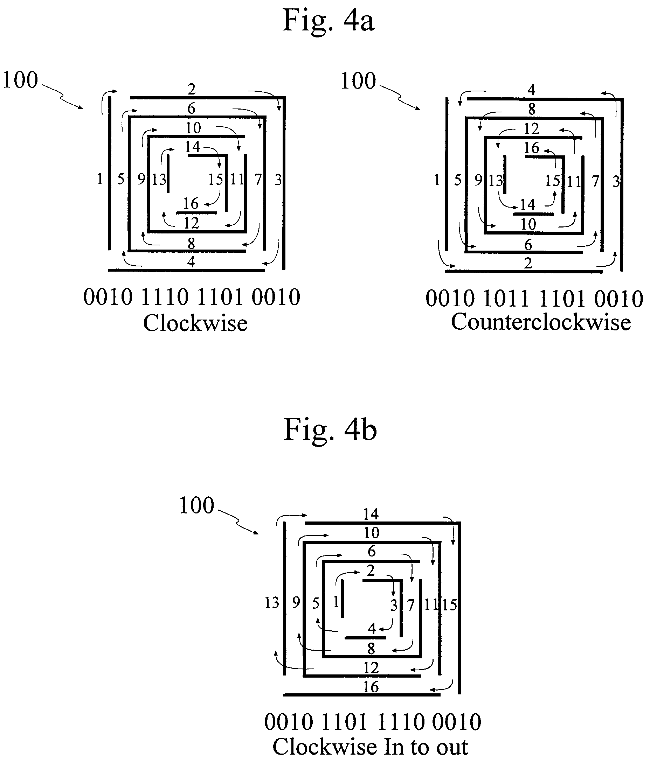

Figs. 4a-f illustrate examples of sequence variables used individually or in combination to encode the printed portion of a coded card, wherein:
   Fig. 4a illustrates reading direction around the elements of a nested figure as being either clockwise or counterclockwise;
   Fig. 4b illustrates reading sequence within the nested figure as reading the outermost element first or reading the innermost element first;

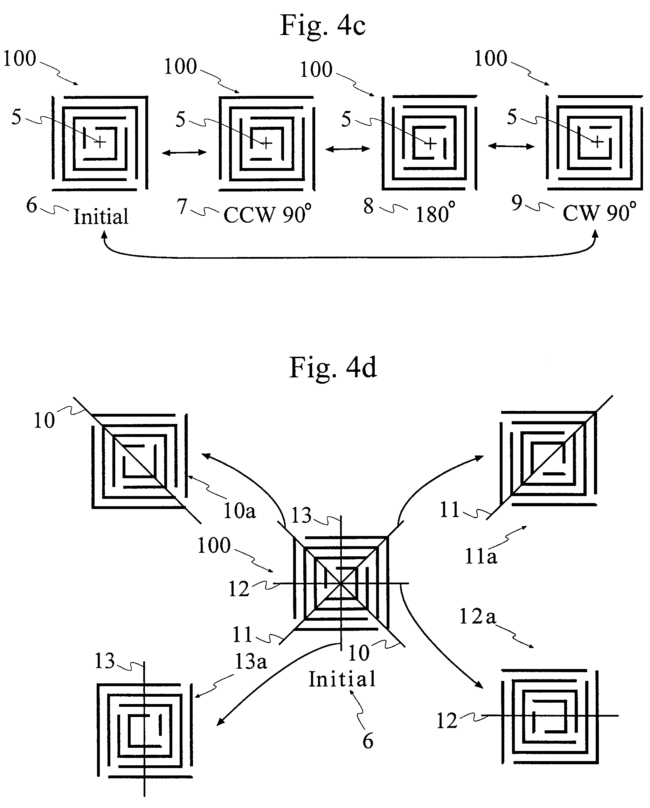

   Fig. 4c illustrates rotation of the nested figure;
   Fig. 4d illustrates reflecting the nested figure;

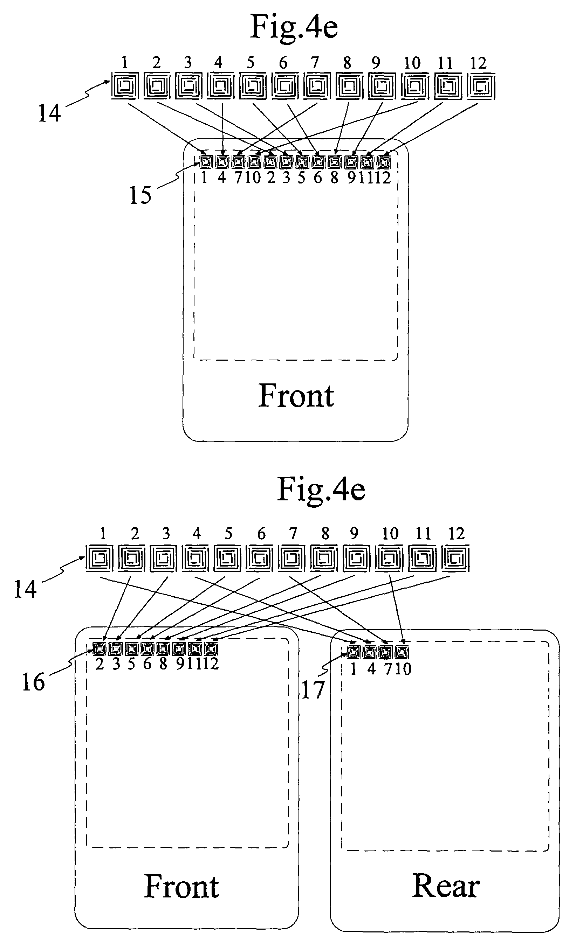

   Fig. 4e illustrates varying the reading sequence of multiple nested figures encoded on the card;
   Fig. 4f illustrates varying the reading sequence of multiple nested figures placed on the front and back of the card;

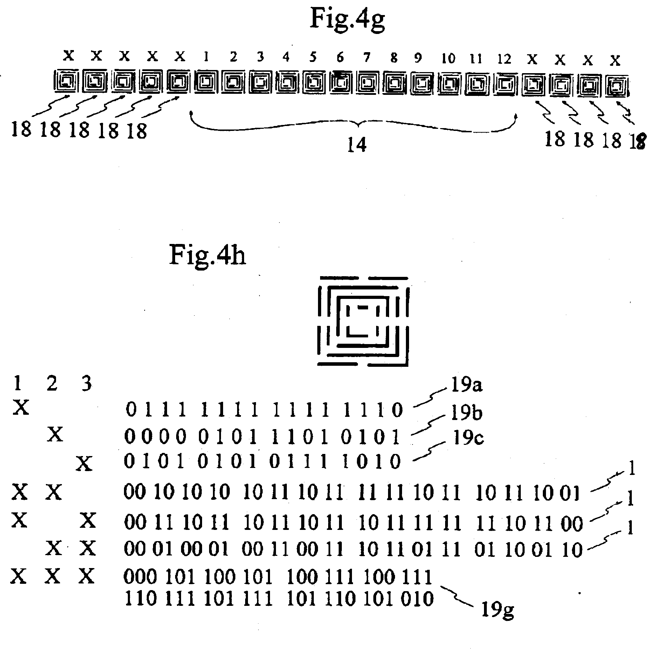

   Fig. 4g illustrates placement of non-encoding nested figures in and around the nested figures that actually encode the information contained on the card; and
   Fig. 4h illustrates using less than the amount of available information capacity in a nested figure such as using only one or two positions of a three position element of a nested figure.

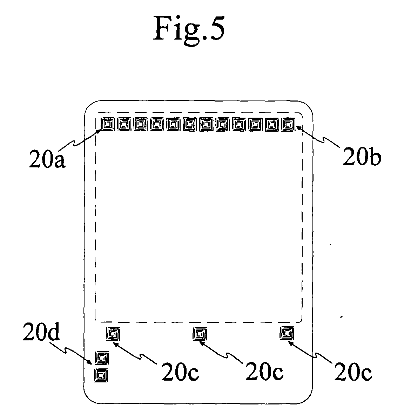

Fig. 5 illustrates varying the position of the key code that allows the card reader to decode the information on a card utilizing variables such as those of figs 4a-h.

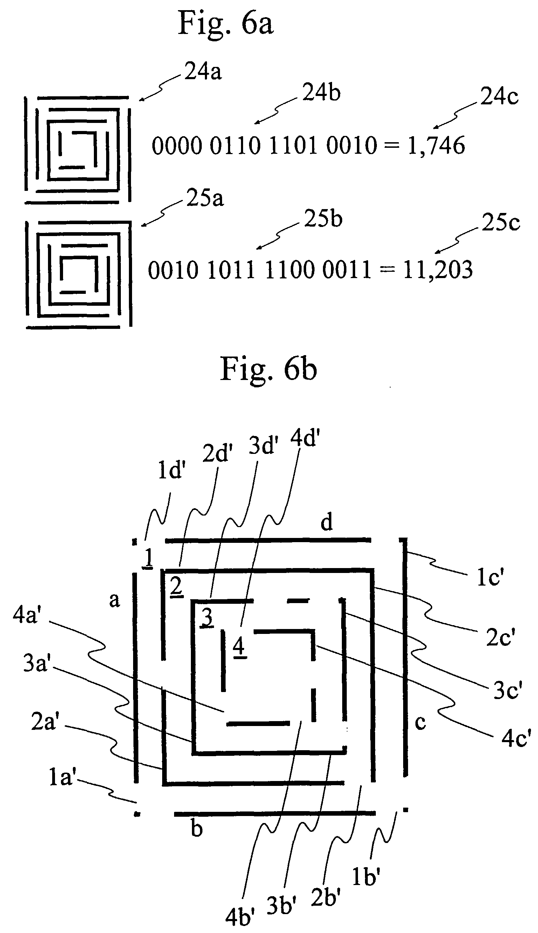

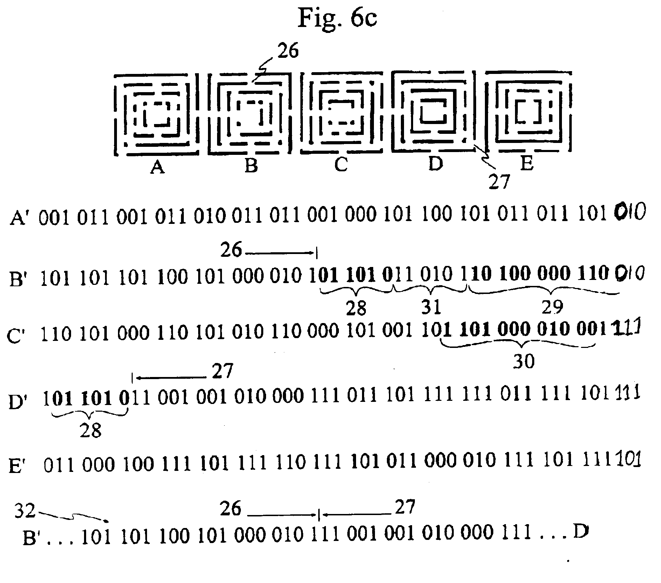

Figs. 6a-d illustrates strategies for decoding, wherein:
   Fig. 6a demonstrates a decoding key that encodes a protocol number;
   Fig. 6b demonstrates a decoding key utilizing segments of the key code arbitrarily assigned to correspond to a sequence variable that has been applied to the code;
   Fig. 6c demonstrates embedding on/off signals in the read sequence; and

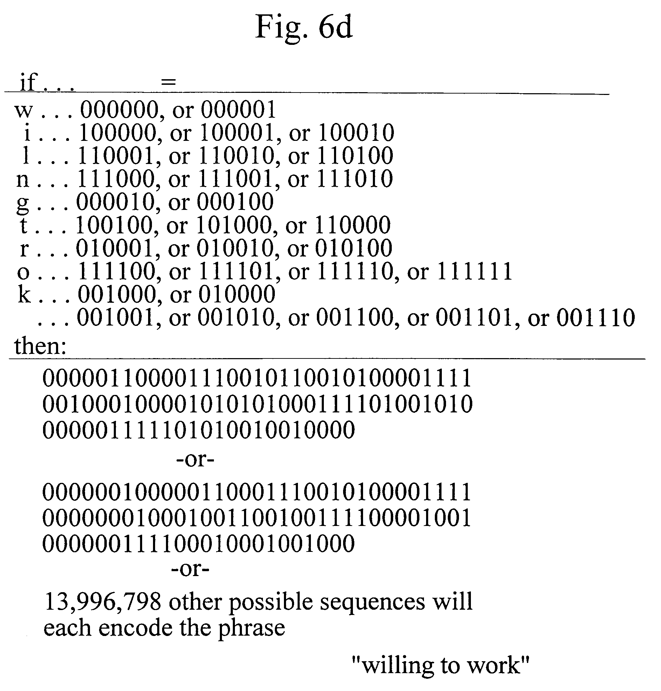

   Fig. 6d demonstrates using a degenerate code to directionally encrypt information to be accurate only in the read direction and degenerate in the write direction.

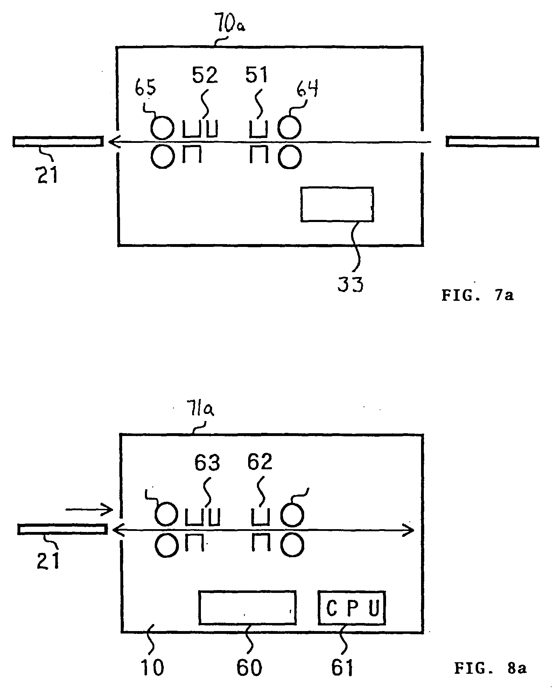

Fig 7a is a card issuing machine of the present invention that issues cards with information printed on a single side.

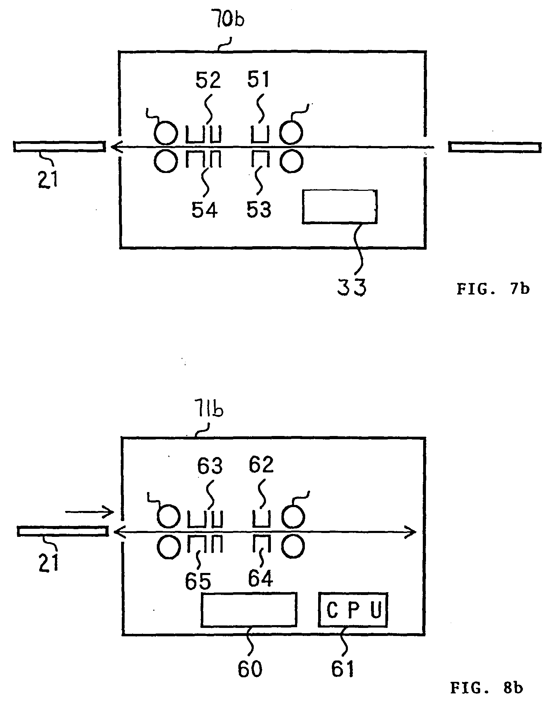

Fig 7b is a card issuing machine of the present invention that issues cards with information printed on both sides of the card.
Fig 8a is a card reader of the present invention that deciphers cards with information printed on a single side.
Fig 8b is a card reader of the present invention that deciphers cards with information printed on both sides of the card.
Fig. 9a is a plan view of a conventional two-dimensional code card of the prior art that utilizes a Calra code for encoding information.
Fig. 9b is an example of a unit of Calra code used in encoding information on the coded card of Fig. 9a.
Fig. 10 is a simplified block diagram of a conventional card issuing machine for issuing the prior art card of fig. 9a.
Fig. 11 is a simplified block diagram of a conventional card reader for reading the prior art card of fig. 9a.

### DETAILED DESCRIPTION OF THE PREFERRED EMBODIMENT(S)

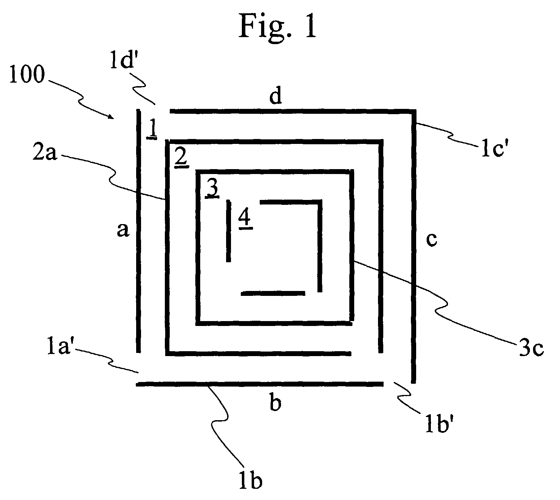

Referring to Fig. 1 an example of a nested figure code 100 is made up of four elements 1-4. Elements 1-4 are four-sided hollow squares, and when considered serially, each is incrementally smaller than the previous. In other words 4 is smaller than 3 by the same amount that 3 is smaller than 2 and the same amount that 2 is smaller than 1. Additionally, elements 1-4 are all concentrically aligned.

Each element 1-4 is made up of four segments, a left segment a, a bottom segment b, a right segment c, and a top segment d. Each segment a-d has at least one gap position a 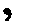 -d 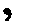 respectively that is either filled or unfilled. Each gap position encodes a bit of binary information. For example, a filled gap position can encode a 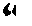 1 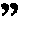 and an unfilled, a 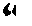 0 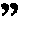 . The reverse is also possible. As illustrated here, the a 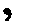 gap position of element 1, i.e. gap position 1a 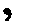 is unfilled and encodes a 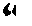 0 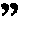 , while the gap position 1c 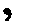 is filled and encodes a 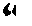 1 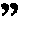 . Gap positions 1b 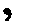 and 1d 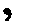 , also labeled in Fig. 1, each encode 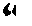 0 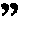 .

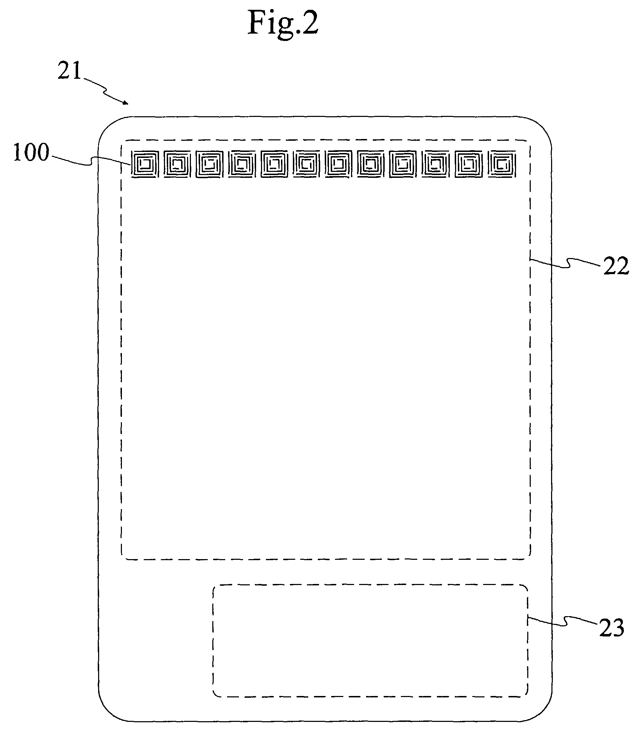

Referring to Fig. 2, a coded card 21 as an example of the type of card used in the present invention, is encoded with binary information using multiples of nested figure 100 of the type shown in Fig. 1. The information is printed here on the first line in a coded information printing area 22. As the card is used and the information changes the code is reprinted with the appropriate changes on subsequent lines of coded information printing area 22. Coded card 21 may also optionally include an identification printing area 23 and/or a key-code 20d. The printing of each nested code 100 is illustrated here in black ink. Optionally, the actual printing on the card may be accomplished with ink that is not visible to the human eye. For example, ink that is readable by exposure to UV light is routinely used to imprint the information illustrated.

Referring to Figs. 3a-d, a variety of embodiments of nested figures are illustrated by example that offer variety of choice for encoding the information. Fig. 3a illustrates a four-sided/four element nested figure 100, having one gap position per segment, that is equivalent to that illustrated in Fig. 1. A nested figure 100' in Fig. 3b is similar to nested figure 100 of Fig. 3a in that it is also a four-sided/four element nested figure. However, nested figure 100' differs in that it has two gap positions per segment. Likewise, a nested figure 100'', shown in Fig. 3c, differs from nested figures 100 and 100' in that nested figure 100'' has three gap positions per segment. However, unlike nested figures 100, 100', and 100'', nested figure 101, two of which are illustrated in fig 3d, is a three-sided/three-element figure. Although, nested figure 101 is illustrated here having one gap position per segment additional embodiments having multiple gap positions per segment are possible. Also, additional embodiments having nested figures with five or more segments per element are also considered to be within the scope of use in the present invention.

In order to overcome the problems solved by the present invention, variables in the encoding and reading of the nested code on the coded card are defined individually and enacted variably in the issuance of each coded card. Figs. 4a-h illustrate some of the variables. This list of variables is not exhaustive and other variables of encoding and reading are considered within the scope of the present invention.

Figs. 4a and 4b demonstrate variation in the sequence of reading the segments within each nested figure element. Fig. 4a demonstrates nested figure 100 being read in a clockwise sequence, or alternatively in a counterclockwise sequence, beginning with the outermost element's left segment. Conversely, Fig. 4b demonstrates the clockwise reading beginning with the innermost element 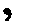 s left segment. Not illustrated are other possible variables. For example, Figs. 4a and 4b demonstrate reading all the segments of one element in the nested figure then moving on to the next element, however it is also a variation to read all of the left segments first then move counterclockwise to read all of the bottom segments, then all the right segments, etc. This could be done from out to in or in to out. The direction of move could also be clockwise. For another example, the direction of reading of the element may alternate, reading the outermost element in a clockwise sequence then reading the next element in a counterclockwise sequence and so forth. It is even possible to use a randomly specified read sequence such that the read order has an unpredictable pattern specified in a numbered protocol.

Figures 4c and 4d illustrate examples of read variables that alter the configuration of the whole nested figure prior to reading. For example, fig. 4c demonstrates rotating nested figure 100 by 90° increments around a rotation point 5. The positions possible as illustrated here for a four-sided nested figure are an initial position 6, a position 7 where the nested figure is rotated counterclockwise 90°, a position 8 where the nested figure is rotated 180°, and a position 9 where the nested figure is rotated clockwise 90°. Other variables, not shown, on this theme of rotation are also considered within the scope of this invention. For example, rather than rotating the entire nested figure to the same position, each element may be rotated separately to a different position.

Fig 4d demonstrates the variable effect of reflecting the nested figure using different reflection axes. This variable is most effective when the segments of the nested figure each have more than one gap position. Here, a reflection of initial configuration 6 of the nested figure around diagonal axis 10 will produce a configuration 10a of the nested figure. Likewise, a reflection of initial configuration 6 of the nested figure around diagonal axis 11 will produce a configuration 11a of the nested figure. Also, a reflection of initial configuration 6 of the nested figure around horizontal axis 12 will produce a configuration 12a of the nested figure. Furthermore, a reflection of initial configuration 6 of the nested figure around vertical axis 13 will produce a configuration 13a of the nested figure.

Figs. 4e and 4f illustrate examples of variably positioning the nested figures on the card such that a read order 14 is not the sequence that they appear on the card. Fig. 4e illustrates a one-sided card where a print order 15 prints the first of every three nested figures initially then follows this by printing the remaining nested figures in order. Fig. 4f uses the same extraction pattern but utilizes both the front and rear of the card to generate a print order 17 consisting of the first of every three nested figures printed on the rear of the coded card and a print order 16 consisting of the remaining nested figures, in order, printed on the front of the coded card. As with other printing variables illustrated supra, many other patterns, not shown, of ordering the nested figures are conceived as being within the scope of this invention. For example: reading in reverse order, varying the number of elements skipped, or using a predetermined random read order that is identified by a protocol number.

Figure 4g illustrates a read variable where read sequence 14 is printed on the coded card flanked on both ends by multiples of a non-coding nested figure 18. Ideally, each non-coding nested figure 18 is randomly generated and the number used may not only very from card to card but from line to line on the same card. Optionally, a non-coding nested figure 18 may be inserted at specified intervals in the coding sequence or randomly inserted according to a numbered protocol.

Fig. 4h illustrates the read variable where information derived from each individual segment is varied. Specifically, the figure illustrates the reading of less than the displayed information possible. By example here, a nested figure 100'', such as the type described in Fig. 3c, having 3 gap positions per segment, is used to generate any one of read sequences 19a-g by using the counterclockwise read sequence of Fig 4a. To generate read sequence 19a, only the first gap position is read on each segment. To generate read sequence 19b, only the second gap position is read on each segment. To generate read sequence 19c, only the third gap position is read on each segment. To generate read sequence 19d, the first and second gap positions are read on each segment; for 19e, the first and third; for 19f the second and third; and for 19g all three gap positions are read. Many alternative variables, not shown, are also considered to be within the scope of this invention. For example, nested figure 100'' can be read two or three times using a different gap position on each reading, the gap position direction of read can flow in the opposite direction to that of the segment direction of read, or a different pattern of gap position reading can be utilized for the segments of each element.

The use of the above variables in the encoding of information on the coded card is effective at evading a counterfeiter's efforts to decode the card because each coded card uses a different set of variables. The variables utilized are identified on the code by the use of a key-code also printed on the card. Key-coding the card can take the form of a variety of schemes. Once established the key code is standardized. The card-reader reads the key-code in a standard way and uses the information decoded from the key code to decode the rest of the information on the card. However, since the key code looks exactly like the code used for encoding the rest of the information, and since the key code can be placed anywhere on the card, it becomes impossible for the would be counterfeiter to determine which of the nested figures on the card is the key. Additionally, phantom key-codes can be placed on the card to act a decoys.

Fig. 5 is used here to demonstrate some possible examples of some of the positions that key codes can be placed on the card or schemes for identifying which of the key codes are authentic. The most simple example is that the first position of the first line is the key code, shown here as 20a. Alternatively, last position 20b, or any pre-specified position of the first line, is the key code. The key code can be placed on the card once or it may be replaced by an alternative key for each subsequent line printed as the information changes and is updated. The key code may be one or both of two alternatives 20d wherein some characteristic in the key or a predetermined order controls. Lastly illustrated, the key-code may be disposed at one or all of alternative positions 20c and the position or the order of reading of the key determined by a paired code at, for example, position 20a or 20b.

Not only the position but the character of the key itself can act as a variable to create a barrier against deciphering. For example, the key can simply be a date code number or a protocol number and the actual protocol for all cards issued to that number can be programed into the card reader. Fig. 6a illustrates two such examples of protocol numbers. A nested code 24a is a key code that is read by the simple counterclockwise read scheme of Fig. 4a. The corresponding binary readout 24b is the equivalent of a base 10 protocol number 24c. Likewise, the binary readout 25b of nested figure 25a is equivalent to a protocol number 25c. Since, a four-segment/four-element/single-gap nested figure has a 16 bit capacity one such key code can encode 2¹⁶ which is 65,536 different protocol numbers or date codes. If a double gap position nested figure is used the number of possibilities increases to 4.2 billion and for a triple gap position nested figure encodes 2.8 X 10¹⁴ different protocol numbers. Of course the triple gap position nested figure key-code can be used in a degenerate single gap mode as illustrated in Fig. 4h.

A key code scheme may alternatively utilize a direct encoding of the variables on the card itself Fig. 6b illustrates a four-segment/four-element/triple-gap nested figure key code wherein all of the gap positions to be read are labeled for the convenience of this discussion. The key shown is an example and its content is arbitrarily decided by the person setting up the system. Its use in this disclosure is to illustrate how such a key code is formulated. The variables here are as follows:

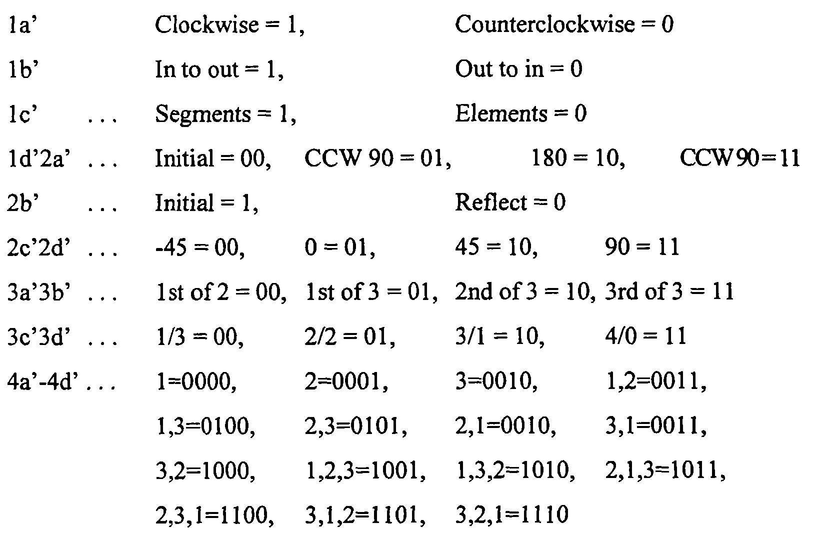

With such a key-code as given in Fig. 6b applied to a card with four-segment/four-element/triple-gap nested figures, the following decoding sequence would be followed for reading the coded information on the card: Because key gap positions 1d 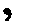 2a 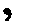 read 0 1 all the nested figures will first be rotated counterclockwise 90°; then because key gap position 2b 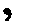 is a 0 all the nested figures will be reflected according to key gap positions 2c 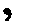 2d 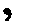 ; since key gap positions 2c 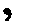 2d 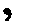 read 1 1 the reflect axis will be the 90° axis; since key gap positions 3a 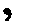 3b 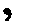 read 1 1 the first two nested codes will be read from the front of the card first, then the first from the rear of the card, then the next two from the front, then the next one from the rear, and so forth; since key gap positions 3c 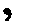 3d 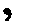 read 1 1 the first four nested figures will be ignored and the remaining will be read; since key gap positions 4a 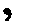 -4d 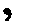 read 0 0 1 0 each segment will be decoded by reading the 2nd gap position then the 1st gap position while the 3rd gap position will be ignored; since key gap position 1a 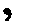 reads 0, 1b 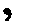 reads 0, and 1c 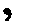 reads 1, all the left segments of a nested figure will be read from the outermost to the innermost first then moving counterclockwise all the bottom segments will be read from out to in, then the right from out to in then the top from out to in.

Once a card is decoded the readout is a string of binary code. Optionally, a binary code readout can be further processed in a number of ways that make interpretation of the code a further barrier to the potential counterfeiter. An example of a post readout processing is given in Fig. 6c where a stop read position 26 and a start read position 27 are embedded in the readout to designate portions of the readout that are to be ignored. In this way junk code can be implanted at various positions in an actual read sequence 32 at position 26-27. Many such start and stop signals are possible. Shown here is an example that uses a stop signal 29 that is placed in the junk code an interval 31 from a position element 28. The actual readout 32 ends where the position element begins. At the other end of the junk code a start signal 30 signals the near presence of a second position element 28 and the actual readout 32 begins again where position element 28 ends.

Another post readout processing example utilizes a degenerate code, such as that demonstrated in Fig. 6d, that uses more than one binary word to designate a letter, numeral, character, punctuation mark, or space, etc. Such a degenerate code is usually based on use frequency distribution of the characters as they appear in the language being encoded. Spaces and punctuation are also given multiple codes according to their frequency so that the beginning and end of words and sentences are not revealed.

Here it is demonstrated that the letters w, g, and k each have two possible codes; i, l, n, t, and r each have three possibilities; o has four possibilities; and a 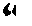 space 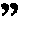 has five possible codes. With this sample code the phrase 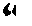 willing to work 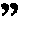 can be encoded 13,996,800 different ways, all of which will read out perfectly, and each of which has only a 1 in 13,996,800 chance of occurring. The example shown here uses for illustration only six bit binary words, which is insufficient to degeneratively encode a large alphabet. However, the use of a larger binary word such as a 10 or 12 bit word is more than sufficient for most applications. A 12 bit word is the most convenient for encoding using a four-segment/four-element/triple-gap nested figure because each element encodes 12 bits of information.

Referring now to Figs. 7a and 7b, card issuing machines 70a and 70b, respectively are capable of issuing cards of the present invention by utilizing a blank card of the type necessary to generate coded card 21 of Fig. 2. Unlike card issuing machine 41 of the prior art, shown in Fig. 10, the initial optical reading sensor 50 has been eliminated in card issuing machines 70a and 70b.

In Fig 7a, a control unit 33, of card issuing machine 70a, is used to generate the key code and control writing head 51 to print the key code and nested figure code information on the face of the card blank, using invisible ink, in accordance to the print scheme dictated by the key code generated. Subsequently, optical reading head 52 reads and verifies newly generated coded card 21 then issues the card to the customer.

In Fig 7b, control unit 33, of card issuing machine 70b, is used to generate the key code and controls writing head 51 to print the key code and nested figure code on the face of the card blank and a writing head 53 to print nested figure code on the rear of the card blank. As with card issuing machine 70a, card issuing machine 70b prints using invisible ink, in accordance to the print scheme dictated by the key code generated. Subsequently, optical reading head 52 reads and verifies the front of newly generated coded card 21 while an optical reading head 54 reads and verifies the rear. When all the code is correctly printed and verified card issuing machine 70b issues the two-sided coded card 21 to the customer.

Further referring to Figs 8a and 8b, a card reader 71a, of Fig. 8a, is capable of reading the one sided coded card 21 issued by card issuing machine 70a, of Fig 7a, while a card reader 71b, of Fig. 8b, is capable of reading the two sided coded card 21 issued by card issuing machine 70b, of Fig 7b. As with card issuing machines 70a and 70b, card readers 71a and 71b have also eliminated the optical reading sensor 50 of the prior art card reader 42 of Fig. 11.

In Fig 8a, card reader 71a reads only the face of coded card 21 by means of reading head 63. CPU 61 then decodes coded card 21 according to the key code that is printed thereon. The transaction desired is entered by the customer through fee input unit 60. The transaction is executed and the balance is then encoded onto the next blank line of coded card 21 by writing head 62 under control of CPU 61 in accordance to the key code on coded card 21. The updated card is then verified by reading head 63 and if correct reissued to the customer.

Similarly in Fig. 8b, card reader 71b reads the face of coded card 21 by means of reading head 63, and also reads the rear of coded card 21 by means of reading head 65. CPU 61 then decodes coded card 21 according to the key code that is printed thereon. The transaction desired is entered by the customer through fee input unit 60. The transaction is executed and the balance is then encoded onto the next blank line of the front of coded card 21 by writing head 62 and of the rear of coded card 21 by writing head 64. Both writing heads 62 and 64 operate under control of CPU 61 in accordance to the key code on coded card 21. The updated card is then verified by reading heads 63 and 65 and if correct reissued to the customer.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A variably encrypted coded card, comprising:
said coded card having a face and a back;
encoded information printed on at least one of said face and said back;
said encoded information printed with an ink like substance, said ink like substance being at least one selected from the group consisting a visible ink like substance and an invisible ink like substance;
at least a part of said encoded information including at least one two dimensional nested figure code;
said encoded information including an information code, and at least one key code;
said two dimensional nested figure code composed of at least one element having an overall shape, said overall shape having a rotation point and a polylateral symmetry;
each said at least one element consisting of a plurality of segments arranged end to end to form said overall shape;
each said segment having at least one gap position, each said gap position encoding a bit of binary data; and
said key code encoding a data dictating an information code decoding protocol for decoding said information code.

2. The variably encrypted coded card of claim 1 wherein:
said key code is a two dimensional nested figure code;
said key code is decoded by a standard key decoding protocol; and
said information code decoding protocol is one selected from the group consisting of directly readable from said key code, correlated with a stored protocol corresponding to a number given by said key code, and correlated with a stored protocol corresponding to an issue date given by said key code.

3. The variably encrypted coded card of claim 1 wherein said information code decoding protocol includes at least one selected from the group consisting of:
rotating at least one of said at least one element of said two dimensional nested figure code about said rotation point,
reflecting at least one of said at least one element of said two dimensional nested figure code about a reflection axis,
advancing a reading of at least one of said at least one element in a clockwise direction,
advancing a reading of at least one of said at least one element in a counterclockwise direction,
advancing a reading to a next said at least one element of said nested figure in an outside to inside direction,
advancing a reading to said next said at least one element of said nested figure in an inside to outside direction,
reading all of a corresponding said segment for all said at least one element of each said at least one nested figure code in an outside to inside direction prior to advancing,
reading all of a corresponding said segment for all said at least one element of each said at least one nested figure code in an inside to outside direction prior to advancing,
dictating a read order of a plurality of said nested figure codes,
dictating a position of non-readable said nested figure codes,
dictating a position of readable said nested figure codes,
dictating a position of non-readable said gap positions, and
dictating a position of readable said gap positions.

4. The variably encrypted coded card of claim 1, wherein:
said overall shape having polylateral symmetry is an overall shape having quadrilateral symmetry.

5. The variably encrypted coded card of claim 2, wherein:
said overall shape having polylateral symmetry is an overall shape having quadrilateral symmetry.

6. The variably encrypted coded card of claim 3, wherein:
said overall shape having polylateral symmetry is an overall shape having quadrilateral symmetry.

7. A variably encrypted coded card, comprising:
an information code;
at least one key code;
said information code and said at least one key code being composed of at least one two dimensional nested figure code, each said at least one two dimensional nested figure code having an overall shape with a rotation point and polylateral symmetry; and
said key code encoding at least one reading variable for decoding said information code.

8. The variably encrypted coded card of claim 7, wherein:
said polylateral symmetry is quadrilateral symmetry.

9. The variably encrypted coded card of claim 7, wherein said at least one variable includes at least one selected from the group consisting of:
rotating at least one of at least one element of said two dimensional nested figure code about said rotation point,
reflecting at least one of said at least one element of said two dimensional nested figure code about a reflection axis,
advancing a reading of at least one of said at least one element in a clockwise direction,
advancing a reading of at least one of said at least one element in a counterclockwise direction,
advancing a reading to a next said at least one element of said nested figure in an outside to inside direction,
advancing a reading to said next said at least one element of said nested figure in an inside to outside direction,
reading all of a corresponding segment for all of at least one element of each said at least one nested figure code in an outside to inside direction prior to advancing,
reading all of a corresponding said segment for all said at least one element of each said at least one nested figure code in an inside to outside direction prior to advancing,
dictating a read order of a plurality of said nested figure codes,
dictating a position of non-readable said nested figure codes,
dictating a position of readable said nested figure codes,
dictating any position of a non-readable gap position of each said at least one segment, and
dictating any position of a readable gap position of each said at least one segment.

10. The variably encrypted coded card of claim 8, wherein said at least one variable include at least one selected from the group consisting of:
rotating at least one of at least one element of said two dimensional nested figure code about said rotation point,
reflecting at least one of said at least one element of said two dimensional nested figure code about a reflection axis,
advancing a reading of at least one of said at least one element in a clockwise direction,
advancing a reading of at least one of said at least one element in a counterclockwise direction,
advancing a reading to a next said at least one element of said nested figure in an outside to inside direction,
advancing a reading to said next said at least one element of said nested figure in an inside to outside direction,
reading all of a corresponding segment for all of at least one element of each said at least one nested figure code in an outside to inside direction prior to advancing,
reading all of a corresponding said segment for all said at least one element of each said at least one nested figure code in an inside to outside direction prior to advancing,
dictating a read order of a plurality of said nested figure codes,
dictating a position of non-readable said nested figure codes,
dictating a position of readable said nested figure codes,
dictating any position of a non-readable gap position of each said at least one segment, and
dictating any position of a readable gap position of each said at least one segment.

11. A method of encoding a variably encrypted coded card, comprising the steps of:
providing a selected key code to be printed on said coded card;
said selected key code being one selected from a plurality of key codes;
each key code of said plurality of key codes corresponding to a unique decoding protocol;
printing said selected key code as a two-dimensional nested figure code on said coded card; and
printing information on said coded card in a manner consistent with said unique decoding protocol corresponding to said selected key code.

12. The method of encoding a variably encrypted coded card of claim 11, wherein the step of printing said selected key code and the step of printing information are accomplished using an invisible ink.

13. A method of using a variably encrypted coded card generated by the method of claim 12, comprising the steps of:
illuminating said card with an invisible ink illuminator;
reading said key code according to a standard protocol; and
reading said information according to said unique decoding protocol corresponding to said key code.

14. The method of using a variably encrypted coded card of claim 13, further comprising the step of further processing a readout from said step of reading said information to yield a final information.

15. The method of using a variably encrypted coded card of claim 14, wherein said further processing includes at least one of removing non-readable code regions defined by stop and start signals, and converting readable code regions into standard alphanumeric characters using a degenerate decoding table.
